# FASCICULE DE BREVET EUROPEEN

(11) **EP 3 500 931 B1**
(45) Date de publication et mention de la délivrance du brevet: **18.11.2020**
(21) Numéro de dépôt: 17748460.7
(22) Date de dépôt: 01.08.2017
(51) Int. Cl.: G06F 9/48, G06F 13/362

(54) **SYSTÈME INFORMATIQUE MULTICOEUR OU MULTIPROCESSEUR POUR L'EXÉCUTION DE TÂCHES HARMONIQUES**
COMPUTERSYSTEM MIT MEHREREN KERNEN ODER PROZESSOREN ZUR AUSFÜHRUNG VON HARMONISCHEN AUFGABEN
MULTICORE OR MULTIPROCESSOR COMPUTER SYSTEM FOR THE EXECUTION OF HARMONIC TASKS

(30) Priorité: 18.08.2016 FR 1657812
(43) Date de publication de la demande: 26.06.2019
(73) Titulaire: Safran Electronics & Defense, 92100 Boulogne-Billancourt (FR)
(72) Inventeur: LIU, Céline, 92100 Boulogne-Billancourt (FR); VALPARD, Christian, 92100 Boulogne-Billancourt (FR)
(74) Mandataire: Lavialle, Bruno François Stéphane
(86) Numéro de dépôt international: PCT/EP2017/069483
(87) Numéro de publication internationale: WO 2018/033387

(56) Documents cités:
- US-A- 5 881 284
- US-A1- 2004 068 730

## Description

La présente invention concerne la gestion de tâches dans les systèmes informatiques multi-cœurs ou multiprocesseurs.

### ARRIERE PLAN DE L'INVENTION

Il est connu des systèmes informatiques comprenant plusieurs unités de traitement (cœurs ou processeurs) reliées à des ressources (des mémoires notamment) pour exécuter des tâches. Les performances de ces systèmes dépendent de la bonne répartition des tâches entre les différentes unités de traitement. Or, il s'agit d'un problème non polynomial : il n'existe pas de solution optimale générale.

Pour assurer la meilleure répartition possible, il est connu d'utiliser des systèmes d'exploitation temps réel. La gestion des tâches reste cependant relativement complexe et coûteuse en temps.

### OBJET DE L'INVENTION

L'invention a pour but de fournir un moyen simple permettant l'exécution d'un ensemble harmonique de tâches dans un système informatique.

### RESUME DE L'INVENTION

A cet effet, on prévoit un système informatique comprenant plusieurs unités de traitement qui sont synchrones et accèdent de manière non concurrente à des ressources pour exécuter un ensemble harmonique de tâches numérotées et ordonnées par périodes croissantes de telle manière que chaque tâche a une priorité d'autant plus élevée que la tâche a une petite période. Selon l'invention, le système comprend un dispositif d'aiguillage d'interruptions de tâche ayant une entrée pour recevoir une base de temps commune, des sorties reliées chacune à une des unités de traitement, des registres correspondant chacun à une des sorties, des compteurs réinitialisables correspondant chacun à une des sorties, et une unité de commande agencée pour : réémettre chaque interruption de tâche vers la sortie dont le registre a la plus grande valeur et, en cas d'égalité, vers celle de ces sorties dont le compteur a la plus faible valeur ; mémoriser dans chaque registre le numéro de la tâche en cours d'exécution sur l'unité de traitement reliée à la sortie correspondante ; et, à chaque fois qu'une interruption de tâche est réémise sur une des sorties, incrémenter de 1 le compteur correspondant.

Lors de l'exécution, toutes les tâches devant être exécutées à une certaine date sont regroupées dans une séquence de tâches ordonnées de la plus prioritaire à la moins prioritaire et qui va s'exécuter sur la même unité de traitement. Il est ainsi procédé à un empilement de séquences de tâches réparti sur les unités de traitement. Les tâches sont numérotées de manière que leurs périodes soient ordonnées dans un ordre croissant. L'ensemble de ces tâches est harmonique si, quelle que soit la tâche i, la période de la tâche i divise la période de la tâche i+1. En outre, plus les tâches ont une petite période, plus leur priorité est élevée. Le dispositif d'aiguillage assure la répartition des séquences de tâches en sélectionnant l'unité de traitement exécutant la tâche la moins prioritaire ou, en cas d'égalité, l'unité de traitement la moins utilisée. Le fonctionnement de l'organe d'aiguillage est de la sorte simple et rapide.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue schématique d'un système informatique selon l'invention dans une configuration avec deux unités de traitements ;
- la figure 2 est une table illustrant le fonctionnement de ce système informatique avec une telle configuration comportant deux unités de traitement.

### DESCRIPTION DETAILLEE DE L'INVENTION

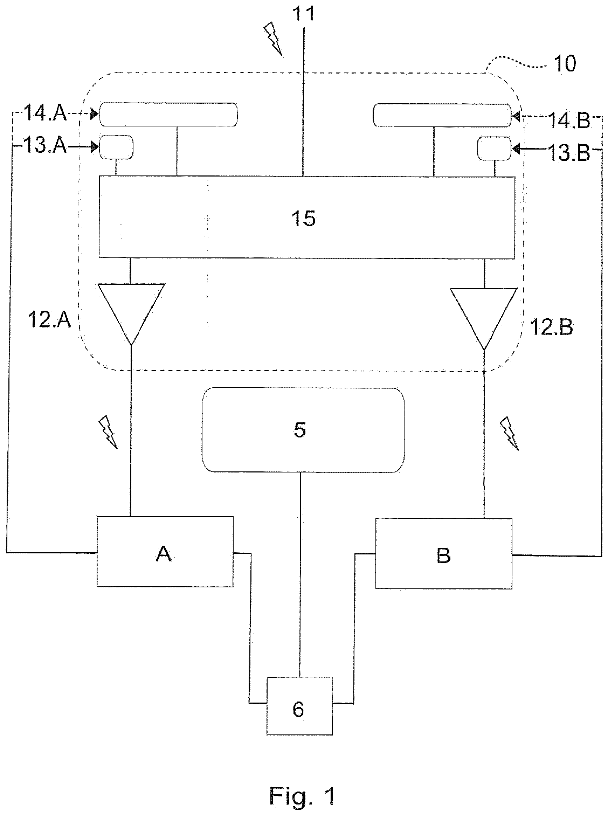

En référence à la figure 1, le système informatique selon l'invention comprend deux unités de traitement A, B reliées à des ressources généralement désignées en 5. Les unités de traitement A, B sont ici deux cœurs d'un même processeur mais elles pourraient être deux processeurs distincts. Les unités de traitement A, B sont synchrones et accèdent de manière non concurrente aux ressources 5. Les ressources 5 comprennent notamment de la mémoire vive, de la mémoire morte, un dispositif d'entrée/sortie... Le système informatique comprend également une horloge centrale partagée par les unités de traitement A, B, une unité d'alimentation 6 alimentant en énergie les composants du système informatique.

Le système comprend un dispositif d'aiguillage 10 d'interruptions de tâche ayant :
- une entrée 11 pour recevoir respectivement une base de temps commune,
- une sortie 12.A reliée à l'unité de traitement A,
- une sortie 12.B reliée à l'unité de traitement B,
- un registre 13.A, de 16 bits, correspondant à la sortie 12.A,
- un registre 13.B, de 16 bits, correspondant à la sortie 12.B,
- un compteur réinitialisable par l'unité A de 64 bits 14.A correspondant à la sortie 12.A,
- un compteur réinitialisable par l'unité B de 64 bits 14.B correspondant à la sortie 12. B,
- une unité de commande 15.

La base de temps commune est uniquement communiquée à l'unité de commande 15 du dispositif d'aiguillage 10.

L'unité de commande 15 comprend un circuit comportant un processeur et une mémoire lui permettant d'exécuter un programme informatique. L'unité de commande 15 est reliée à l'entrée 11, aux sorties 12.A, 12.B, et accède aux registres 13.A, 13.B, et aux compteurs 14.A, 14.B.

Le système informatique met en œuvre un programme de gestion (ou système d'exploitation) organisant un fonctionnement des unités de traitement A, B en maître esclave selon un principe connu en lui-même.

Le système informatique est agencé pour exécuter un ensemble harmonique de tâches sans décalage, numérotées et ordonnées de telle manière que chaque tâche a une priorité d'autant plus élevée que la tâche a une petite période. Il y a ici quatre tâches i et une tâche de fond F : le numéro i prend ici les valeurs 1, 2, 3 et 4 et est inférieur au numéro F. A titre d'exemple :
- la tâche 1 a une période de 4 ms,
- la tâche 2 a une période de 8 ms,
- la tâche 3 a une période de 16 ms,
- la tâche 4 a une période de 32 ms.

L'unité de commande 15 est programmée pour :
- réémettre chaque interruption de tâche vers la sortie 12.A, 12.B dont le registre 13.A, 13.B a la plus grande valeur et, en cas d'égalité, vers celle de ces sorties 12.A, 12.B dont le compteur a la plus faible valeur,
- mémoriser, dans chaque registre 13.A, 13.B, le numéro i de la tâche en cours d'exécution sur l'unité de traitement A, B reliée à la sortie 12. A, 12.B correspondante (ces informations sont fournies par l'unité correspondante) et,
- à chaque fois qu'une interruption de tâche est réémise sur une des sorties 12.A, 12.B, incrémenter de 1 le compteur 14.A, 14.B correspondant. Ce programme est relativement court puisque quelques lignes suffisent pour coder ces fonctions.

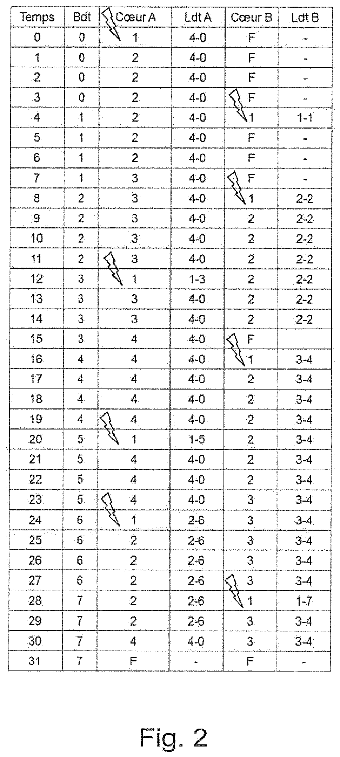

Le fonctionnement du système informatique et, plus particulièrement, du dispositif d'aiguillage 10 va maintenant être décrit en référence à la figure 2. L'activation des tâches est classique et n'est pas détaillée ici.

L'unité de commande 15 reçoit une interruption de tâche à chaque début de pas de temps (chaque pas de temps dure 4 ms).

Au début du pas de temps 0 (temps 0) , l'unité de traitement B exécute la tâche de fond F et l'unité de commande 15 transmet l'interruption de tâche (symbolisée par un éclair sur les figures) sur la sortie 12. A pour que l'unité de traitement A exécute la tâche 1.

A chaque fois qu'une interruption de tâche est réémise sur une des sorties 12.A, 12.B, l'unité de commande 15 incrémente de 1 le compteur 14. A, 14.B correspondant. Ici le compteur 14.A est incrémenté.

A chaque exécution d'une nouvelle tâche par une unité de traitement A, B, l'unité de traitement concernée transmet le numéro de la tâche à l'unité de commande 15 qui l'enregistre dans le registre 13.A, 13.B correspondant.

Au début du pas de temps 1 (temps 4), la valeur (2) du registre 13.A est inférieure à celle (F) du registre 13. B. L'unité de commande 15 réémet l'interruption de tâche sur la sortie 12.B pour que l'unité de traitement B interrompe l'exécution de la tâche F pour exécuter la tâche 1.

A la fin de la tâche 1, l'unité de traitement B reprend l'exécution de la tâche F.

Au cours du pas de temps 1, l'unité de traitement A a terminé la tâche 2 et débute l'exécution de la tâche 3.

Au début du pas de temps 2 (temps 8), la valeur (3) du registre 13.A est inférieure à celle (F) du registre 13.B. L'unité de commande 15 réémet l'interruption de tâche sur la sortie 12.B pour que l'unité de traitement B interrompe l'exécution de la tâche F pour exécuter la tâche 1.

A la fin de la tâche 1, l'unité de traitement B débute l'exécution de la tâche 2.

Au début du pas de temps 3 (temps 12), la valeur (3) du registre 13.A est supérieure à celle (2) du registre 13.B. L'unité de commande 15 réémet l'interruption de tâche sur la sortie 12.A pour que l'unité de traitement A interrompe l'exécution de la tâche 3 pour exécuter la tâche 1.

Au cours du pas de temps 3, l'unité de traitement A débute l'exécution de la tâche 4 une fois la tâche 3 terminée et l'unité de traitement B débute l'exécution de la tâche F une fois la tâche 2 terminée.

Au début du pas de temps 4 (temps 16), la valeur (4) du registre 13.A est inférieure à celle (F) du registre 13.B. L'unité de commande 15 réémet l'interruption de tâche sur la sortie 12. B pour que l'unité de traitement B interrompe l'exécution de la tâche F pour exécuter la tâche 1.

A la fin de la tâche 1, l'unité de traitement B débute l'exécution de la tâche 2.

Au début du pas de temps 5 (temps 20), la valeur (4) du registre 13.A est supérieure à celle (2) du registre 13. B. L'unité de commande 15 réémet l'interruption de tâche sur la sortie 12.A pour que l'unité de traitement A interrompe l'exécution de la tâche 4 pour exécuter la tâche 1.

A la fin de la tâche 1, l'unité de traitement B reprend l'exécution de la tâche 4 et l'unité de traitement B débute l'exécution de la tâche 3 à la fin de la tâche 2.

Au début du pas de temps 6 (temps 24), la valeur (4) du registre 13.A est supérieure à celle (3) du registre 13.B. L'unité de commande 15 réémet l'interruption de tâche sur la sortie 12.A pour que l'unité de traitement A interrompe l'exécution de la tâche 4 pour exécuter la tâche 1.

Au cours du pas de temps 6, l'unité de traitement A débute l'exécution de la tâche 2 une fois la tâche 1 terminée.

Au début du pas de temps 7 (temps 28), la valeur (2) du registre 13.A est inférieure à celle (3) du registre 13.B. L'unité de commande 15 réémet l'interruption de tâche sur la sortie 12.B pour que l'unité de traitement B interrompe l'exécution de la tâche 3 pour exécuter la tâche 1.

A la fin de la tâche 1, l'unité de traitement B reprend l'exécution de la tâche 3.

A la fin de la tâche 2, l'unité de traitement A reprend l'exécution de la tâche 2 puis débute l'exécution de la tâche F.

A la fin de la tâche 3, l'unité de traitement B débute l'exécution de la tâche F.

On voit que, à chaque interruption, une nouvelle liste de tâches à réaliser Ldt A, Ldt B est affectée à chaque cœur A, B. Il y a dans l'exemple décrit quatre listes de tâches numérotées 1 à 4 :
- la liste 1 prévoit l'exécution de la tâche 1 ;
- la liste 2 prévoit l'exécution en séquence des tâches 1 et 2 ;
- la liste 3 prévoit l'exécution en séquence des tâches 1, 2 et 3 ;
- la liste 2 prévoit l'exécution en séquence des tâches 1, 2, 3 et 4.

A la figure 2, on peut voir que pour le cœur A :
- la liste de tâches 4 est lancée au temps 0 (notation 4-0) ;
- la liste de tâches 1 est lancée au temps 3 (notation 1-3) ;
- la liste de tâches 1 est lancée au temps 5 (notation 1-5) ;
- la liste de tâches 2 est lancée au temps 6 (notation 2-6).

Pour le cœur B :
- la liste de tâches 1 est lancée au temps 1 (notation 1-1) ;
- la liste de tâches 2 est lancée au temps 2 (notation 2-2) ;
- la liste de tâches 3 est lancée au temps 4 (notation 3-4) ;
- la liste de tâches 1 est lancée au temps 7 (notation 1-7).

On comprend que l'exécution d'une liste de tâches peut être interrompue pour l'exécution d'une nouvelle liste de tâches à la fin de laquelle reprendra l'exécution de la liste de tâches interrompue.

Le fonctionnement du système informatique se poursuit de la même manière.

Bien entendu, l'invention n'est pas limitée au mode de réalisation décrit mais couvre toute variante entrant dans le champ de l'invention telle que définie par les revendications.

En particulier, le système informatique peut avoir une structure différente de celle décrite. Il peut par exemple comprendre plus de deux unités de traitement.

Le dispositif d'aiguillage peut être réalisé sous la forme d'un circuit dédié ou d'un circuit reconfigurable de type FPGA.

Les numéros des tâches peuvent avoir une forme différente : seul importe l'ordonnancement des tâches en fonction de leur période.

## Revendications

1. Système informatique comprenant plusieurs unités de traitement (A, B) qui sont synchrones et accèdent de manière non concurrente à des ressources (5) pour exécuter un ensemble harmonique de tâches numérotées (i) et ordonnées de telle manière que chaque tâche a une priorité d'autant plus élevée que la tâche a une petite période, **caractérisé en ce que** le système comprend un dispositif d'aiguillage (10) d'interruptions de tâche ayant une entrée (11) pour recevoir une base de temps commune, des sorties (12.A, 12.B) reliées chacune à une des unités de traitement (A, B), des registres (13. A, 13. B) correspondant chacun à une des sorties, des compteurs réinitialisables (14.A, 14.B) correspondant chacun à une des sorties et une unité de commande (15) agencée pour réémettre chaque interruption de tâche vers la sortie (12.A, 12.B) dont le registre (13.A, 13. B) a la plus grande valeur et, en cas d'égalité, vers celle de ces sorties (12.A, 12.B) dont le compteur (14.A, 14.B) a la plus faible valeur, mémoriser dans chaque registre le numéro (i) de la tâche en cours d'exécution sur l'unité de traitement (A, B) reliée à la sortie correspondante et, à chaque fois qu'une interruption de tâche est réémise sur une des sorties (12.A, 12.B), incrémenter de 1 le compteur (14. A, 14.B) correspondant.

2. Système informatique selon la revendication 1, dans lequel les registres (13. A, 13.B) ont une capacité de 16 bits.

3. Système informatique selon la revendication 1, dans lequel les compteurs (14.A, 14.B) sont des compteurs de 64 bits.

## Patentansprüche

1. Computersystem, umfassend mehrere Verarbeitungseinheiten (A, B), die synchron sind und auf nicht konkurrierende Weise auf Ressourcen (5) zugreifen, um eine harmonische Gruppe von Aufgaben auszuführen, die derart nummeriert (i) und geordnet sind, dass jede Aufgabe eine Priorität hat, die umso höher ist, je kürzer die Zeitdauer der Aufgabe ist, **dadurch gekennzeichnet, dass** das System eine Verteilervorrichtung (10) für Aufgabenunterbrechungen umfasst, die einen Eingang (11) hat, um eine gemeinsame Zeitbasis zu empfangen, Ausgänge (12.A, 12.B), die jeweils mit einer der Verarbeitungseinheiten (A, B) verbunden sind, Register (13.A, 13.B), die jeweils einem der Ausgänge entsprechen, reinitialisierbare Zähler (14.A, 14.B), die jeweils einem der Ausgänge entsprechen, und eine Steuereinheit (15), die so ausgebildet ist, dass sie jede Aufgabenunterbrechung zu dem Ausgang (12.A, 12.B) erneut sendet, dessen Register (13.A, 13.B) den größten Wert hat, und im Falle einer Gleichheit, zu demjenigen dieser Ausgänge (12.A, 12.b), dessen Zähler (14.A, 14.B) den geringsten Wert hat, in jedem Register die Nummer (i) der Aufgabe während der Ausführung auf der Verarbeitungseinheit (A, B), die mit dem entsprechenden Ausgang verbunden ist, speichert und jedes Mal, wenn eine Aufgabenunterbrechung auf einen der Ausgänge (12.A, 12.B) erneut gesendet wird, den entsprechenden Zähler (14.A, 14.B) um 1 inkrementiert.

2. Computersystem nach Anspruch 1, bei dem die Register (13.A, 13.B) eine Kapazität von 16 Bit haben.

3. Computersystem nach Anspruch 1, bei dem die Zähler (14.A, 14.B) 64-Bit-Zähler sind.

## Claims

1. A computer system comprising a plurality of processor units (A, B) that are synchronous and that access resources (5) in non-concurrent manner in order to execute a harmonic set of tasks that are numbered (i), and that are ordered in such a manner that the shorter the period of a task, the higher its priority, the system being **characterized in that** it comprises a task interrupt switch device (10) having an input (11) for receiving a common time base, outputs (12.A, 12.B) each connected to a respective one of the processor units (A, B), registers (13.A, 13.B) each corresponding to a respective output, reinitializable counters (14.A, 14.B) each corresponding to a respective output, and a control unit (15) arranged: to reissue each task interrupt to the output (12.A, 12.B) for which the register (13.A, 13.B) has the greatest value, and in the event of equality, to the output (12.A, 12.B) for which the counter (14.A, 14.B) has the smallest value; to store in each register the number (i) of the task currently executing on the processor unit (A, B) connected to the corresponding output; and each time a task interrupt is reissued on one of the outputs (12.A, 12.B), to increment the corresponding counter (14.A, 14.B) by 1.

2. A computer system according to claim 1, wherein the registers (13.A, 13.B) have a capacity of 16 bits.

3. A computer system according to claim 1, wherein the counters (14.A, 14.B) are 64-bit counters.
